# EUROPEAN PATENT SPECIFICATION

(11) **EP 3 867 011 B1**
(45) Date of publication and mention of the grant of the patent: **28.05.2025**
(21) Application number: 19873539.1
(22) Date of filing: 17.10.2019
(51) Int. Cl.: B24D 3/02, C09G 1/02, C09K 3/14

(54) **PACKAGE INCLUDING ABRASIVE ARTICLE AND DESICCANT**
VERPACKUNG MIT SCHLEIFARTIKEL UND TROCKENMITTEL
EMBALLAGE COMPRENANT UN ARTICLE ABRASIF ET UN DÉSHYDRATANT

(30) Priority: 17.10.2018 US 201862746925 P
(43) Date of publication of application: 25.08.2021
(73) Proprietor: Saint-gobain Abrasives, Inc, Worcester, Massachusetts 01615-0138 (US); Saint-Gobain Abrasifs, 78700 Conflans-Sainte-Honorine (FR)
(72) Inventor: LATOURNERIE, Jérôme, 37400 Amboise (FR); CASTAGNA, Alicia M., Cambridge, Massachusetts 02138 (US)
(74) Representative: Zimmermann & Partner Patentanwälte mbB
(86) International application number: PCT/US2019/056826
(87) International publication number: WO 2020/081870

(56) References cited:
- EP-A2- 0 832 686
- KR-A- 20080 031 221
- US-A- 4 036 360
- US-A- 4 316 738
- US-A1- 2011 155 593
- US-A1- 2011 155 593
- US-A1- 2014 367 608

## Description

### TECHNICAL FIELD

This disclosure, in general, relates to a package including an abrasive article and desiccant, and particularly to a package including a bonded abrasive article and desiccant.

### BACKGROUND ART

Abrasive articles are used in various industries to machine work pieces by cutting, lapping, grinding, or polishing. Abrasive articles are often shipped from one location to another and stored for an amount of time prior to use. As some bonded abrasive articles have bond matrix materials that are susceptible to water vapor adsorption, humid environment can adversely affect performance and cause performance degradation of such bonded abrasive articles. Performance degradation can include, for example, an increase in wear rate of the abrasive article, a reduction in grind rate on a work piece, or a reduction in the amount of cutting before the abrasive article wears out. A need for improved abrasive article packaging exists.

US 2011/155593 A1 discloses an article, comprising a package including a packaging material defining an enclosed volume containing an abrasive article and a desiccant.

The above given problems are solved by the article according to claim 1.

### BRIEF DESCRIPTION OF THE DRAWINGS

The present disclosure may be better understood, and its numerous features and advantages made apparent to those skilled in the art by referencing the accompanying drawings.
FIG. 1 includes an illustration of an exemplary package including an abrasive article.
FIG. 2 includes an illustration of a structure of an exemplary desiccant.
FIG. 3 includes an illustration of a cross section of an exemplary abrasive article.
FIG. 4 includes an illustration of an exemplary packaging material.
FIG. 5 includes an illustration of another exemplary package including an abrasive article.
FIG. 6 includes an illustration of another exemplary packaging material.
FIG. 7 includes graphs of moisture uptake for some abrasive articles.
FIG. 8 includes graphs of moisture uptake for some additional abrasive articles.
FIG. 9 includes graphs of moisture uptake for some other abrasive articles.
FIG. 10A includes graphs of moisture uptake for abrasive articles.
FIG. 10B includes graphs illustrating G-Ratio and Material Removal Rate of abrasive articles.

The use of the same reference symbols in different drawings indicates similar or identical items. Embodiments are illustrated by way of example and are not limited in the accompanying figures. Skilled artisans appreciate that elements in the figures are illustrated for simplicity and clarity and have not necessarily been drawn to scale. For example, the dimensions of some of the elements in the figures may be exaggerated relative to other elements to help to improve understanding of embodiments of the invention.

### DETAILED DESCRIPTION OF THE PREFERRED EMBODIMENTS

The following description in combination with the figures is provided to assist in understanding the teachings disclosed herein. The following discussion will focus on specific implementations and embodiments of the teachings. This focus is provided to assist in describing the teachings and should not be interpreted as a limitation on the scope or applicability of the teachings. However, other teachings can certainly be used in this application.

As used herein, the terms "comprises," "comprising," "includes," "including," "has," "having" or any other variation thereof, are intended to cover a non-exclusive inclusion. For example, a method, article, or apparatus that comprises a list of features is not necessarily limited only to those features but may include other features not expressly listed or inherent to such method, article, or apparatus. Further, unless expressly stated to the contrary, "or" refers to an inclusive-or and not to an exclusive-or. For example, a condition A or B is satisfied by any one of the following: A is true (or present) and B is false (or not present), A is false (or not present) and B is true (or present), and both A and B are true (or present).

Also, the use of "a" or "an" is employed to describe elements and components described herein. This is done merely for convenience and to give a general sense of the scope of the invention. This description should be read to include one or at least one and the singular also includes the plural, or vice versa, unless it is clear that it is meant otherwise. For example, when a single item is described herein, more than one item may be used in place of a single item. Similarly, where more than one item is described herein, a single item may be substituted for that more than one item.

Unless otherwise defined, all technical and scientific terms used herein have the same meaning as commonly understood by one of ordinary skill in the art to which this invention belongs. The materials, methods, and examples are illustrative only and not intended to be limiting. To the extent that certain details regarding specific materials and processing acts are not described, such details may include conventional approaches, which may be found in reference books and other sources within the manufacturing arts.

Embodiments are drawn to an article including a package including a packaging material defining an enclosed volume, and an abrasive article and a desiccant contained within the enclosed volume. The package can be suited for shipping or storing abrasive articles including a hygroscopic bond material, such as a resin-based bond material or a hygroscopic inorganic material. The package can help to significantly reduce moisture uptake (i.e., water vapor adsorption) of abrasive articles contained therein, particularly when the package is exposed to a humid condition, and thus, can allow improved packaging and extended storage, reducing the likelihood of performance degradation of the abrasive article.

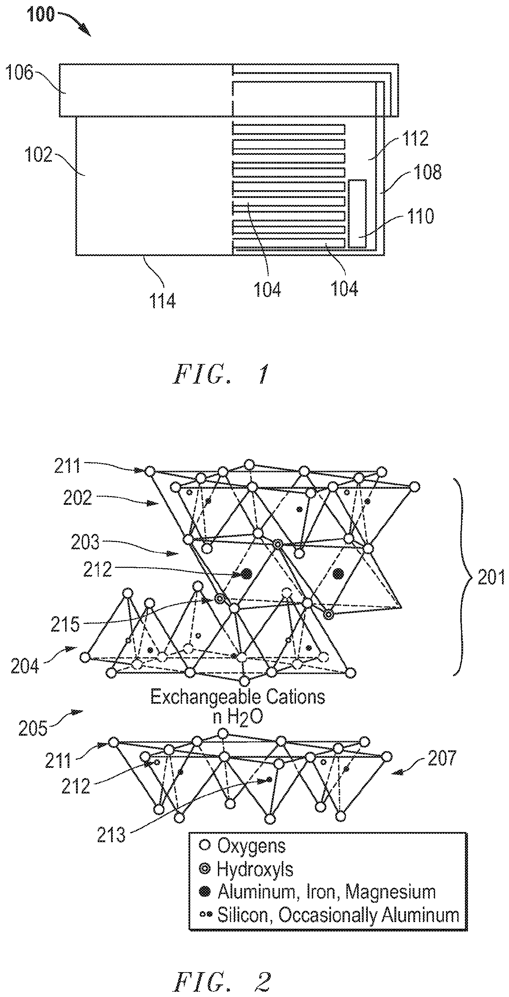

FIG. 1 includes an illustration of an exemplary embodiment of a package 100. The package 100 includes at least one self-supporting wall 102 defining an edge of an enclosed volume 112 in which abrasive articles 104 are contained. The package 100 can also include a bottom 114 and a top 106. In an example, the bottom 114 can be formed of the same material as the wall 102. Alternatively, the bottom 114 can be formed of a different material than the wall 102. The bottom 114 can be friction fit with the wall 102. In another example, the wall 102 can have a screw configuration. In a further example, the bottom 114 can be integrally formed with the wall 102 or can be adhered to the wall 102, such as by using an adhesive. As illustrated, the package 100 is in the form of a bucket. A skilled artisan would understand that the package 100 can take any other forms to contain the abrasive articles, e.g., for shipping and storage of the abrasive articles, such as in the form of a box.

As illustrated in the cross section, the wall 102 is formed of a packaging material 108. In an embodiment, the packaging material 108 can be rigid such that the packaging material 108 can be self-supporting. A self-supporting packaging material 108 is a material that can stand on its own absent additional support. For example, the self-supporting packaging material 108 can stand on its own (e.g., under its own weight without external forces) without deviating more than 10% in either direction from a longitudinal dimension extending from top to bottom of the self-supporting material 108 when viewed in cross-section.

In an embodiment, the packaging material 108 can have a particular water vapor transmission rate that can facilitate improved packaging and storage of abrasive articles. For instance, the packaging material 108 can have a water vapor transfer rate (WVTR) of at most 2 g/m²-day, at most 1.5 g/m²-day, at most 1 g/m²-day, at most 0.9 g/m²-day, at most 0.8 g/m²-day, at most 0.7 g/m²-day, or at most 0.6 g/m²-day. In another instance, the WVTR can be 0.001 g/m²-day, at least 0.005 g/m²-day, at least 0.01 g/m²-day, at least 0.02 g/m²-day, at least 0.05 g/m²-day, at least 0.07 g/m²-day, at least 0.09 g/m²-day, at least 0.1 g/m²-day, at least 0.12 g/m²-day, at least 0.15 g/m²-day, at least 0.18 g/m²-day, at least 0.2 g/m²-day, or at least 0.3 g/m²-day. Moreover, the WVTR of the packaging material can be in a range including any of the minimum and maximum values noted herein. For instance, the WVTR of the packaging material 108 can be in a range from 0.001 g/m²-day to 2 g/m²-day or in a range from 0.2 g/m²-day to 1 g/m²-day. As used herein, the WVTR can be determined using ASTM F1249 (Standard Test Method for Water Vapor Transmission Rate Through Plastic Film and Sheeting Using a Modulated Infrared Sensor) at 37.8°C and 100% relative humidity (RH). Alternatively, the water vapor transfer rate (WVTR) can be approximated using the material properties of the packaging material.

**In** an embodiment, the packaging material 108 can include an organic material, an inorganic material, or any combination thereof. **In** another embodiment, the packaging material 108 can consist essentially of an organic material. An exemplary organic material can include a thermoset or thermoplastic material. **In** a particular embodiment, the packaging material 108 can include a natural or a synthetic plastics material. For instance, the packaging material 108 can consist essentially of a plastics material. In still another embodiment, the packaging material 108 can include a polymer, or consist essentially of a polymer. An exemplary polymer can include polypropylene, polyethylene, polyvinyl chloride, or any combination thereof. An exemplary polyethylene can include linear low density polyethylene (LLDPE), low density polyethylene (LDPE), medium density polyethylene (MDPE), high density polyethylene (HDPE), ultra high density polyethylene (UHDPE), or any combination thereof. In another example, the polymer can include polyester, such as a polyethylene terephthalate, liquid crystal polymer (e.g., aromatic polyester polymers), or any combination thereof. In a particular embodiment, the packaging material 108 can include polypropylene, and more particularly, the packaging material 108 can consist essentially of polypropylene. In another particular embodiment, the packaging material can consist essentially of polyethylene, such as any of the polyethylene noted herein or a combination thereof.

In another example, the packaging material 108 can include an inorganic material, such as an elemental metal, an alloy, or a combination thereof. For example, the packaging material 108 can include iron, nickel, chromium, aluminum, tin, copper, or any combination thereof. In another instance, the packaging material 108 can include steel, stainless steel, tin-coated steel, plastic-coated steel, or the like.

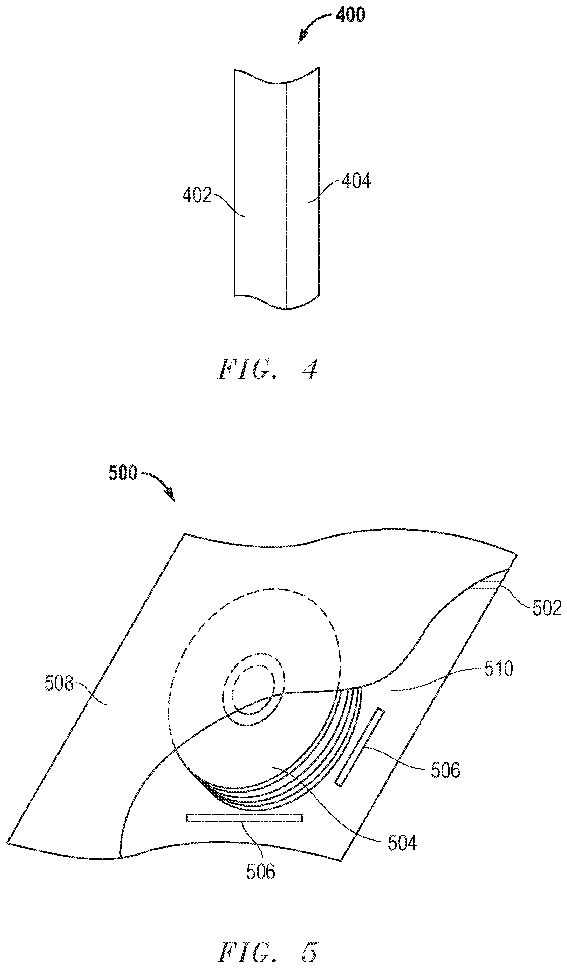

In a particular embodiment, the packaging material 108 can have a multilayer construction. FIG. 4 includes an illustration of an example of the packaging material 108 including a self-supporting material 400. As illustrated, the self-supporting material 400 includes a support material 402 and a barrier material 404. In an example, the barrier material 404 can include a material similar to the packaging material 108. In another instance, the barrier material 404 can include a barrier film, such as a polymer-containing film, a metal-containing film, a metal foil, a metal coated in a polymer film, or any combination thereof. Metal and polymer can include any of the metal or polymers noted above, respectively. An exemplary polymer-containing film can include a polyethylene film, PET film, polypropylene film, or the like. A metal-containing film can include a metalized polymer film, such as a metalized PET film. An exemplary metal foil can include an aluminum foil. In a further embodiment, the barrier film can have a thickness of at least 1 microns. For example, the thickness can be at least 10 microns, such as at least 100 microns, at least 125 microns, or even at least 500 microns. In another instance, the thickness can be at most 5 mm, such as at most 4 mm, at most 3 mm, at most 2 mm, or at most 1 mm. Moreover, the thickness of the barrier material 404 can have a thickness in a range including any of the minimum and maximum values noted herein. For instance, an aluminum foil can have a thickness of at least 1 microns. A typical metallized polymeric film differs from a metal foil, as a metalized film typically includes metal layer thickness on the order of less than 200 nanometers. While a single layer of the barrier material 404 is illustrated, the barrier material 404 can include more than one layer, such as including a plurality of films. In at least one embodiment, the packaging material 108 forms a single layer.

In an embodiment, the barrier material 404 can be secured to the support material 402 through lamination or with an adhesive (not shown). An exemplary support material 402 can include a thermoplastic material, a cured elastomer, a fibrous material, or any combination thereof. An exemplary fibrous material can include an impregnated glass fiber material. In another example, a fibrous material includes a pulp material, such as a paper product, a cardboard, or any combination thereof. In another example, the support material includes a thermoplastic material in a thickness to provide desirable self-supporting characteristics of the support material 402. In an example, the thermoplastic material includes polyolefin, polyvinylchloride, polyester, ethylene vinyl acetate copolymer, polyvinylidene chloride, polystyrene, acrylic polymer, vinyl acetate, polyamide, polycarbonate, a copolymer thereof, or any combination thereof. For example, the thermoplastic material can be a polyolefin material, such as polyethylene, polypropylene, ethylene propylene copolymer, ethylene butene copolymer, ethylene octene copolymer, olefinic block copolymers, polyvinyl butyral, or any combination thereof. An exemplary polyethylene can include linear low density polyethylene (LLDPE), low density polyethylene (LDPE), medium density polyethylene (MDPE), high density polyethylene (HDPE), ultra high density polyethylene (UHDPE), or any combination thereof. In a further example, the support material 402 includes a cured elastomer. An exemplary cured elastomer includes a diene elastomer such as an ethylene propylene diene monomer (EPDM) elastomer. In an embodiment, the barrier material can form the interior surface of the package and support material can form the exterior surface of the package. In another embodiment, the barrier material can form the exterior surface and the support material can form the interior surface.

The top 106 can be secured to the wall 102 by for example, a friction fit or press fit. In another example, the top 106 can be secured to the wall 102 using a screw top configuration. Alternatively, the top 106 can include a peel tab to reveal an opening to allow an abrasive article to be taken out of the package, and in some particular instances, the peel tab may be pressed on to reclose the package. In an example, the top 106 can be formed of a material similar to the wall 102. In an alternative example, the top 106 can be formed of a material different from the wall 102.

The wall 102, the top 106, and the bottom 114 form an enclosed volume 112 within which the abrasive articles 104 and a desiccant 110 are contained. In an embodiment, the desiccant 110 can include a silicate, such as silicate minerals including metal ions. Exemplary metal ions can include aluminum, magnesium, iron, or any combination thereof. A further exemplary silicate can include aluminosilicate.

In another embodiment, the desiccant 110 can include a crystalline material, such as a polycrystalline or monocrystalline material. In another embodiment, the desiccant 110 can include a polycrystalline material having a layered crystalline structure. For instance, the desiccant 110 can include alternating crystal sheets formed of anions, cations, or any combination thereof. The alternating crystal sheets can include sheets having different structures, such as tetrahedral sheets alternating with octahedral sheets. In a particular example, the layered crystalline structure can include a plurality of units, wherein each unit can include at least one tetrahedral sheet and at least one octahedral sheet. In a further example, each unit can include a ratio of tetrahedral to octahedral crystal sheets, such as 1: 1 or 2:1. In another particular example, the desiccant 110 can include a 2:1 ratio of tetrahedral to octahedral crystal sheets. In another instance, the desiccant 110 can include an interlayer between adjacent units, wherein the interlayer can include H₂O, cations, or any combination thereof. An exemplary cation can include calcium ions, sodium ions, potassium ions, or any combination thereof. In a particular instance, the desiccant 110 can include an interlayer including calcium ions. More particularly, calcium ions can make up most of the cations in the interlayer, and even more particularly, the cations in the interlayer can consist essentially of calcium ions.

FIG. 2 includes an illustration of a portion of a layered crystalline structure of an example of the desiccant 110. The crystalline structure can include a unit 201 including tetrahedral sheets 202 and 204 alternating with an octahedral sheet 203. An interlayer 205 is between the unit 201 and an adjacent unit in which only a tetrahedral sheet 207 is illustrated. The tetrahedral sheet, 202, 204, and 207, can include oxygens 211 and silicon 212. Some silicon may be substituted by aluminum 213. The octahedral sheet 203 can include hydroxyl 215 and metal cations 212, such as aluminum, iron, magnesium, or any combination thereof.

In a further embodiment, the desiccant 110 can include molecular sieves, clay, or any combination thereof. Exemplary clay can include a smectite, such as a bentonite or a montmorillonite, a sepiolite, or any combination thereof. In a particular example, clay can include a 2:1 ratio of tetrahedral to octahedral crystal sheets. In another example, the desiccant 110 can include bentonite, montmorillonite, sepiolite, or any combination thereof. In another particular example, the desiccant 110 can consist essentially of at least one of bentonite, montmorillonite, and sepiolite. For instance, the desiccant 110 can consist essentially of bentonite. In another instance, the desiccant 110 can consist essentially of montmorillonite. In still another instance, the desiccant 110 can consist essentially of sepiolite.

In an embodiment, the desiccant 110 can include a particular amount of calcium ions that can facilitate reduced water vapor adsorption and improved storage of the abrasive article. According to the invention the calcium ions are in a content of at least 7600 ppm of the total weight of the desiccant, such as at least 7800 ppm, at least 8000 ppm, at least 8200 ppm, at least 8300 ppm, at least 8500 ppm, at least 8700 ppm, at least 8900 ppm, at least 9200 ppm, at least 9500 ppm, at least 9700 ppm, at least 9900 ppm, at least 11000 ppm, at least 12000 ppm, at least 13000 ppm, at least 14000 ppm, at least 15000 ppm, at least 16000 ppm, at least 17000 ppm, at least 18000 ppm, at least 19000 ppm, at least 20000 ppm, at least 21000 ppm, at least 22000 ppm, or at least 23000 ppm for the total weight of the desiccant. Further, according to the invention the calcium ions are at most 100000 ppm of a total weight of the desiccant, such as at most 95000 ppm, at most 90000 ppm, at most 85000 ppm, at most 80000 ppm, at most 75000 ppm, at most 70000 ppm, at most 65000 ppm, at most 60000 ppm, at most 55000 ppm, at most 50000 ppm, at most 45000 ppm, at most 40000 ppm, at most 35000 ppm, at most 30000 ppm, or at most 25000 ppm. Moreover, the content of calcium ions can be within a range including any of the minimum and maximum values noted herein. The content of calcium ions is in a range from 7600 ppm to 100000 ppm. In a particular example, the desiccant 110 can include clay having calcium ions in a content noted herein, or more particularly, the desiccant 110 can include bentonite having calcium ions in a content noted herein.

In at least one embodiment, the package 100 can optionally include an additional desiccant. The additional desiccant can be similar to the desiccant 110. Alternatively, the additional desiccant can include a metal oxide or hydroxide scavenger, a metal sulfate scavenger, a metal halide scavenger, a metal silicate, other inorganic scavengers, an organometallic scavenger, a metal ligand, organic scavengers, or any combination thereof. In an instance, a metal includes an alkali metal, such as lithium; an alkaline earth metal, such as beryllium, calcium, magnesium, or barium; a transition metal, such as iron, manganese, palladium, zirconium, cobalt, copper, zinc, titanium, or chromium; other metals, such as aluminum; alloys thereof, or any combination thereof. An exemplary metal oxide scavenger includes dehydrated or partially dehydrated oxides of the above metals, such as calcium oxide, barium oxide, cobalt oxide, magnesium oxide, alumina, titanium oxide, zirconia, zinc oxide, or any combination thereof. An exemplary metal halide can include a halide or perchlorate of a metal listed above, or an exemplary metal sulfate can include a sulfate of a metal listed above, such as sodium sulfate, calcium sulfate, barium sulfate, copper sulfate, or any combination thereof. Another inorganic scavenger can include a montmorillonite clay, a zeolite, activated carbon, silica gel, alumina gel, bauxite, or any combination thereof.

In a further embodiment, the package 100 can include a certain amount of desiccant that can facilitate reduced water vapor adsorption and improved storage of the abrasive article. In an aspect, the package 100 can include desiccant in desiccant units relative to a weight of the abrasive articles contained within the package 100. For instance, the package 100 can include at least 1/50 UD NFH per 1000 grams of abrasive articles. As used herein, the units of desiccant is determined in accordance with Standard NFH 00321. In another instance, the package 100 can include at least 1/50 UD NFH per 900 grams of abrasive articles, at least 1/50 UD NFH per 800 grams of abrasive articles, at least 1/50 UD NFH per 700 grams of abrasive articles, at least 1/50 UD NFH per 650 grams of abrasive articles, at least 1/50 UD NFH per 600 grams of abrasive articles, at least 1/50 UD NFH per 550 grams of abrasive articles, at least 1/50 UD NFH per 500 grams of abrasive articles, at least 1/50 UD NFH per 450 grams of abrasive articles, at least 1/50 UD NFH per 400 grams of abrasive articles, at least 1/50 UD NFH per 350 grams of abrasive articles, at least 1/50 UD NFH per 300 grams of abrasive articles, or at least 1/50 UD NFH per 250 grams of abrasive articles. Additionally, or alternatively, the package 100 can include at most 1/50 UD NFH per 50 grams of abrasive articles, such as at most 1/50 UD NFH per 100 grams of abrasive articles, at most 1/50 UD NFH per 150 grams of abrasive articles, at most 1/50 UD NFH per 200 grams of abrasive articles, or at most 1/50 UD NFH per 250 grams of abrasive articles. Moreover, the package 100 can include desiccant in an amount including any of the minimum and maximum values noted herein. For instance, the package 100 can include desiccant in a range including at least 1/50 UD NFH per 1000 grams of abrasive articles and at most 1/50 UD NFH per 50 grams of abrasive articles.

In another aspect, the package 100 can include a particular weight of desiccant relative to a weight of the abrasive articles contained within the package 100. For example, the package 100 can include at least 0.005 grams of desiccant per gram of abrasive articles, such as at least 0.007 grams of desiccant per gram of abrasive articles, at least 0.01 grams of desiccant per gram of abrasive articles, at least 0.02 grams of desiccant per gram of abrasive articles, at least 0.03 grams of desiccant per gram of abrasive articles, at least 0.04 grams of desiccant per gram of abrasive articles, at least 0.05 grams of desiccant per gram of abrasive articles, at least 0.06 grams of desiccant per gram of abrasive articles, or at least 0.07 grams of desiccant per gram of abrasive articles. Alternatively or additionally, the package 100 can include at most 0.6 grams of desiccant per gram of abrasive articles, such as at most 0.5 grams of desiccant per gram of abrasive articles, at most 0.4 grams of desiccant per gram of abrasive articles, at most 0.3 grams of desiccant per gram of abrasive articles, at most 0.2 grams of desiccant per gram of abrasive articles, at most 0.1 grams of desiccant per gram of abrasive articles, at most 0.09 grams of desiccant per gram of abrasive articles, at most 0.08 grams of desiccant per gram of abrasive articles, at most 0.07 grams of desiccant per gram of abrasive articles, or at most 0.06 grams of desiccant per gram of abrasive articles. Moreover, the package 100 can include desiccant in an amount including any of the minimum and maximum values noted herein.

In an embodiment, the package 100 can include at least one abrasive article, such as at least 3, at least 5, at least 10, at least 20, at least 25, at least 40, at least 50, at least 80, at least 100 abrasive articles. In another instance, the package 100 can include at most 500 abrasive articles, such as at most 450, at most 400, at most 350, at most 300, at most 250, or at most 200 abrasive articles. Moreover, the number of abrasive articles contained in the package 100 can be in a range including any of the minimum and maximum values noted herein.

In an embodiment, the package 100 can include a certain weight of abrasive articles, such as at least 25 grams, at least 45 grams, at least 90 grams, at least 120 grams, at least 150 grams, at least 180 grams, at least 250 grams, at least 400 grams, at least 550 grams, at least 700 grams, at least 800 grams, at least 950 grams, at least 1050 grams, at least 1200 grams, at least 1500 grams, at least 1800 grams, at least 200 grams, at least 2500 grams, at least 3000 grams, at least 3500 grams, at least 4000 grams, at least 4500 grams, at least 5000 grams, or at least 5600 grams of abrasive articles. In another instance, the package 100 can include at most 10000 grams of abrasive articles, such as at most 9000 grams, at most 8000 grams, at most 7000 grams, or at most 5000 grams. Moreover, in some instances, the package 100 can contain abrasive articles having a weight in a range including any of the minimum and maximum values noted herein.

In some instances, the number or weight of the abrasive articles contained in the package may be higher or lower than values noted in embodiments herein. It is to be understood that the weight and number of abrasive articles contained within the package can vary to suit the need of particular applications, and desiccant included in the package can be adjusted taking into consideration, for example, the weight of the abrasive articles, characteristics of the packaging material, and/or the environment the package is to be exposed to.

In an embodiment, the abrasive articles 104 can include a bonded abrasive article. An exemplary bonded abrasive article can include an ultra-thin wheel, a grinding wheel, a combination wheel, a cutoff wheel, a cutting wheel, or any combination thereof. As illustrated, the package 100 includes a plurality of abrasive articles 104 that are stacked on top of one another.

In an embodiment, the abrasive article 104 can have a thickness, defined parallel to an axis of the abrasive article 104 and orthogonal to a radial dimension. The thickness can be in a range of 0.8 mm to 20 mm, such as a range of 0.8 mm to 15 mm, or even a range of 0.8 mm to 10 mm. In another embodiment, the abrasive article can have a diameter in a range of 50 mm to 400 mm, such as a diameter in a range of 75 mm to 230 mm, or even a range of 75 mm to 150 mm. In still another embodiment, the abrasive article can have an aspect ratio, defined as the ratio of the diameter to the thickness, in a range of 5 to 160, such as a range of 15 to 160, a range of 15 to 150, or even a range of 20 to 125.

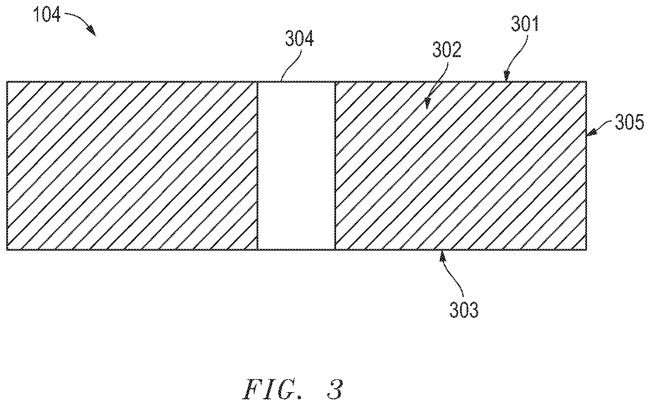

FIG. 3 includes an illustration of a cross section of a cutting wheel, an example of the abrasive articles 104. The abrasive article includes a body 302 and a mounting hole 304. As illustrated, the body 302 includes a first major surface 301, a second major surface 303 opposite the first major surface 301, and a peripheral surface 305 extending between the first and second major surfaces 301 and 303.

In an embodiment, the body 302 can include a bond material and abrasive particles contained within the bond material. In an example, the bond material can include an organic material, such as a resin-based material. A non-limiting example of resin can include phenolic resin, boron-modified resin, nano-particle-modified resin, urea-formaldehyde resin, acrylic resin, epoxy resin, polybenzoxazine, polyester resin, isocyanurate resin, melamine-formaldehyde resin, polyimide resin, other suitable thermosetting or thermoplastic resins, or any combination thereof. An exemplary phenolic resin can include resole and novolac. In another instance, the bond material can include an inorganic material including a hygroscopic material. Such hygroscopic material can absorb water over time as it traverses the packaging material 108. It is believed that after moisture in the product exceeds certain level, the grinding performance such as, grinding and cutting can be degraded.

The abrasive articles 104 can be formed utilizing techniques known in the art. For instance, the body 302 can include abrasive particles known in the art, such as abrasive particles including silica, alumina (fused or sintered), zirconia, zirconialalumina oxides, silicon carbide, garnet, diamond, cubic boron nitride, silicon nitride, ceria, titanium dioxide, titanium diboride, boron carbide, tin oxide, tungsten carbide, titanium carbide, iron oxide, chromia, flint, emery, dolomite, or any combination thereof. The body 302 can optionally include an additive including such as a filler material, secondary abrasive particles, or the like. The fillers can include active and/or inactive fillers. A non-exhaustive list of active fillers can include Cryolite, PAF (a mixture of K₃AlF₆ and KAlF₄), KBF₄, K₂SO₄, barium sulfate, sulfides (FeS₂, ZnS), NaCl/KCl, low melting metal oxides, or combinations thereof. A non-exhaustive list of inactive fillers can include CaO, CaCO₃, Ca(OH)₂, CaSiO₃, Kyanite (a mixture of Al₂O₃-SiO₂), Saran (Polyvinylidene chloride), Nephenline (Na, K) AlSiO₄, wood powder, coconut shell flour, stone dust, feldspar, kaolin, quartz, other forms of silica, short glass fibers, asbestos fibers, balotini, surface-treated fine grain (silicon carbide, corundum etc.), pumice stone, cork powder and combinations thereof. The secondary abrasive grains can include, for example, ceramic oxides (e.g., coated or non-coated fused Al₂O₃, monocrystal Al₂O₃), minerals (e.g., garnet and emery), nitrides (e.g., Si₃N₄, AlN) and carbides (e.g., SiC).

Further, the abrasive article 104 can include one or more reinforcement layers. A reinforcement layer can be made of any number of various materials. An exemplary reinforcement layer can include a polymeric film (including primed films), such as a polyolefin film (e.g., polypropylene including biaxially oriented polypropylene), a polyester film (e.g., polyethylene terephthalate), or a polyamide film; a cellulose ester film; a metal foil; a mesh; a foam (e.g., natural sponge material or polyurethane foam); a cloth (e.g., cloth made from fibers or yams comprising fiberglass, polyester, nylon, silk, cotton, poly-cotton or rayon); a paper; a vulcanized paper; a vulcanized rubber; a vulcanized fiber; a nonwoven material; or any combination thereof, or treated versions thereof. A cloth backing can be woven or stitch bonded. In particular examples, the reinforcement layer can be selected from a group consisting of paper, polymer film, cloth, cotton, poly-cotton, rayon, polyester, poly-nylon, vulcanized rubber, vulcanized fiber, fiberglass fabric, metal foil or any combination thereof. In other examples, the reinforcement layer includes a woven fiberglass fabric.

FIG. 5 includes an illustration of another exemplary package 500 including a packaging material 508 defining an enclosed volume 510 in which abrasive articles 504 and desiccant 506 are disposed. As illustrated, the package is in the form of a bag, such as a pouch. In an embodiment, the pouch can be vacuum sealable. In another embodiment, an insert, such as a cardboard insert or a stiff polymeric insert, can be provided in the pouch or can be formed to one side of the pouch. In a particular example, the package 500 can be configured to reseal after opening, for example, using fastening structures 502.

In at least one embodiment, at least one desiccant 506 can be contained within the enclosed volume 510. The desiccant 506 can be similar to the desiccant 110. The abrasive articles 504 can be similar to the abrasive articles 104. In FIG. 5, the abrasive articles 504 are illustrated as thin cutting wheels.

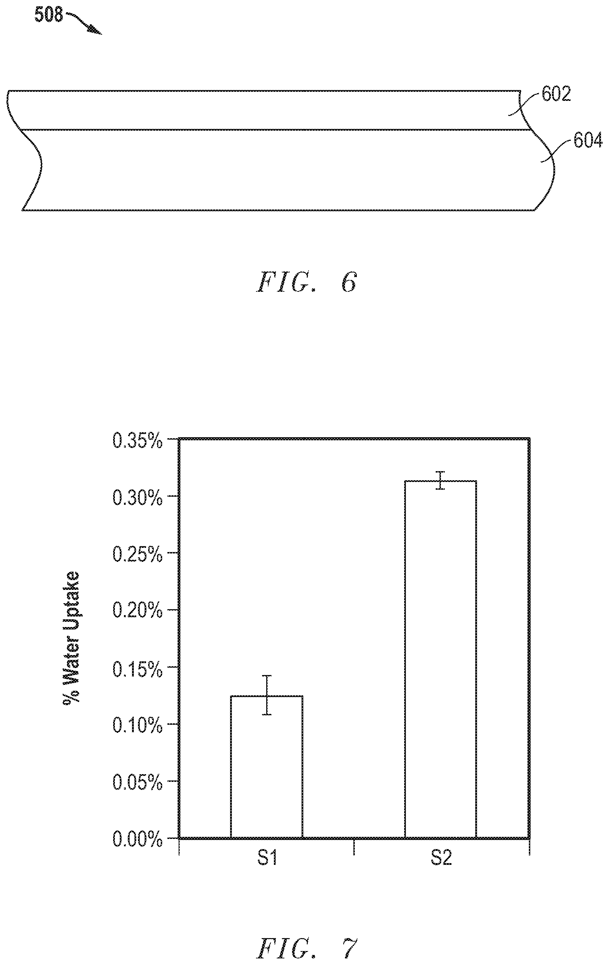

In an embodiment, the packaging material 508 can include a material that is similar to the packaging material 108. In another embodiment, the packaging material 508 can include at least one barrier film. For instance, the packaging material 508 can include a metalized PET film. In another instance, the packaging material can include a PE film, such as a co-extruded PE film. In a particular example, the packaging material 508 can include a metalized PET film and a co-extruded PE film. In another embodiment, the packaging material 508 can include a plurality of layers. FIG. 6 includes an illustration of an example of the packaging material 508 including a barrier material 602 and optionally a support material 604. The barrier material can be similar to the barrier material 404, such as including barrier films noted herein.

In an embodiment, the support layer 504 can provide structural integrity to the barrier layer 502 or can enhance mechanical properties of the packaging material 508. In another embodiment, the support layer 504 can act to bond to itself to form a seal. In an example, the support layer 504 can include a thermoplastic material such as acrylic, vinyl acetate, ethylene vinyl acetate copolymer, polyester, polyolefin, polyamide, polycarbonate, polyvinylchloride, polyvinylidene chloride, polystyrene, or any copolymer, blend or combination thereof. An exemplary polyolefin includes polyethylene, polypropylene, ethylene propylene copolymer, ethylene butene copolymer, ethylene octene copolymer, olefinic block copolymers, polyvinyl butyral, or any combination thereof. An exemplary polyethylene includes linear low density polyethylene (LLDPE), low density polyethylene (LDPE), medium density polyethylene (MDPE), high density polyethylene (HDPE), or any combination thereof. In particular, the thermoplastic material can be a melt adhesive that can be melted in locations and bonded to an opposing sheet material to form a seal around an enclosed volume. Alternatively, a melt adhesive can be placed proximal to locations at which a seal is to be formed, such as along an edge of the packaging material 508.

In another embodiment, the packaging material 508 can have a WVTR similar to the WVTR of the packaging material 108. In still another embodiment, the packaging material 508 can have a WVTR of at most 3.0 g/m²-day, such as at most 2.8 g/m²-day, at most 2.5 g/m²-day, at most 2.2 g/m²-day, at most 2.0 g/m²-day, at most 1.8 g/m²-day, at most 1.6 g/m²-day, at most 1.4 g/m²-day, at most 1.2 g/m²-day, at most 1 g/m²-day, at most 0.8 g/m²-day, at most 0.6 g/m²-day, at most 0.4 g/m²-day, at most 0.30 g/m²-day, at most 0.25 g/m²-day, at most 0.22 g/m²-day, at most 0.20 g/m²-day, at most 0.18 g/m²-day, at most 0.16 g/m²-day, at most 0.15 g/m²-day, at most 0.13 g/m²-day, at most 0.11 g/m²-day, at most 0.09 g/m²-day, at most 0.07 g/m²-day, or at most 0.05 g/m²-day. Alternatively or additionally, the WVTR of the packaging material can be at least 0.001 g/m²-day, at least 0.005 g/m²-day, at least 0.01 g/m²-day, at least 0.02 g/m²-day, at least 0.03 g/m²-day, at least 0.05 g/m²-day, at least 0.08 g/m²-day, at least 0.10 g/m²-day, at least 0.15 g/m²-day, at least 0.20 g/m²-day, at least 0.30 g/m²-day, at least 0.40 g/m²-day, at least 0.50 g/m²-day, at least 0.60 g/m²-day, at least 0.70 g/m²-day, at least 0.80 g/m²-day, at least 0.90 g/m²-day, at least 1.0 g/m²-day, or at least 1.2 g/m²-day. Moreover, the WVTR of the packaging material can be in a range of 0.001 g/m²-day to 3 g/m²-day or in a range of 0.005 g/m²-day to at most 1.5 g/m²-day.

The package described in embodiments herein can notably reduce moisture (e.g., water vapor) uptake of the bonded abrasive articles contained therein, which can help to reduce the likelihood of degradation of performance, such as G-ratio, of the abrasive articles. In an example, the package allows the abrasive articles contained therein to have a Relative G-Ratio of at least 0.7 after exposing the package in the condition of 40°C and 90% relative humidity (RH) for at least 24 days, such as at least 36 days, or at least 48 days. In another instance, the Relative G-Ratio can be at least 0.7, such as at least 0.8, at least 0.85, at least 0.9, or even at least 0.95, such as approximately 1.0 for any of the exposure time period noted herein. The Relative G-Ratio is determined by dividing the G-Ratio of the abrasive article after exposure by the G-Ratio of the dry abrasive article prior to exposure. As used herein, a dry abrasive article refers to the abrasive article that has been dried at 120°C for 24 hours.

Moisture uptake of the abrasive articles contained in the package can be determined as follows. The package can be exposed to the condition of 40°C and 90% **RH** over at least 24 days, such as 24 days, 36 days, 48 days, or an even longer period of time. The percentage of the weight change of the abrasive article is used as moisture uptake, Wu, in this disclosure, and determined by the formula Wu=[(Wa-Wo)/Wo]×100%, where Wo is the weight of the abrasive article prior to exposure and Wa is the weight after the exposure. **In** an embodiment, the abrasive article can have a moisture uptake of at most 0.3% or at most 0.2% or at most 0.1% when the package is exposed to 90% relative humidity at 40°C for 24 days. **In** another embodiment, the bonded abrasive article can have a moisture uptake of at most 0.3% or at most 0.2% or at most 0.1% when the package is exposed to 90% relative humidity at 40°C for 36 days. In still another embodiment, the bonded abrasive article can have a moisture uptake of at most 0.3% or at most 0.2% or at most 0.1% when the package is exposed to 90% relative humidity at 40°C for 48 days.

In a further embodiment, the abrasive article can have a moisture uptake of at most 0.3% when the package is exposed to air at 20°C to 25 °C for a certain period of time, such as at least 1 month, at least 2 months, at least 3 months, at least 4 months, at least 5 months, at least 6 months, or at least 7 months. In an aspect, the abrasive article can have a moisture uptake of at most 0.3% or at most 0.25% or at most 0.2% or at most 0.15 or at most 0.1% or at most 0.05% when the package is exposed to air at 20°C to 25 °C for at least 1 month, such as at least 2 months, at least 3 months, at least 4 months, at least 5 months, at least 6 months, or at least 7 months. For example, the bonded abrasive article can have a moisture uptake of at most 0.2% or at most 0.1% when the package is exposed to air at 20°C to 25 °C for least 1 month. In another example, the bonded abrasive article can have a moisture uptake of at most 0.1% when exposed to air at 20°C to 25 °C for least 1 month, at least 2 months, or at least 3 months.

In an embodiment, the package can include a plurality of abrasive articles, such as at least 2, at least 3, at least 4, at least 5, at least 10, at least 15, at least 20, at least 25, at least 30, at least 35, at least 40, at least 50, at least 55, at least 60, at least 70, at least 80, at least 100, or at least 200 abrasive articles. In accordance with these embodiments, the abrasive articles in the package can have an average moisture uptake including any values of moisture uptake described in embodiments herein. The term, average moisture uptake, is intended to refer to an average of moisture uptake of all the abrasive articles contained in the same package.

Many different aspects and embodiments are possible. Some of those aspects and embodiments are described herein. After reading this specification, skilled artisans will appreciate that those aspects and embodiments are only illustrative and do not limit the scope of the present invention. The scope of the invention is limited by the appended claims.

### EXAMPLES

### Example 1

Commercially available Gemini Right Cut cutoff wheels and different desiccants were placed into plastic buckets made of polypropylene. Each bucket contained 128 g of bentonite clay including different contents of calcium ions and 3 cutoff wheels. The contents of calcium ions are included in Table 1. The buckets were closed with lids made of polypropylene. All the buckets were exposed to 90% RH and 40°C for 12 days, and moisture uptake of the abrasive articles were determined as noted in this disclosure. FIG. 7 includes a bar graph of moisture uptake of samples S1 and S2.

**TABLE 1**

| Sample | Calcium Ion Contents (ppm) in Desiccant |
|---|---|
| S1 | 23000 |
| S2 | 7530 |

As illustrated in FIG. 7, the critical moisture uptake is 0.3% and indicated by the dotted line. When the moisture uptake is beyond the critical level, 0.3%, performance degradation of abrasive articles is expected. S1 demonstrated the average moisture uptake of 0.13%, while S2 had 0.31%.

### Example 2

Samples S3 to S7 were formed by placing commercially available Gemini Right Cut cutoff wheels and different desiccants into plastic buckets made of polypropylene that had the WVTR of 0.56 g/m²-day determined by ASTM F1249 as disclosed in embodiments herein. Table 2 includes package information of the samples. Each bucket of samples S3 to S7 contained 64 g of desiccant and 3 cutoff wheels. A set of 3 wheels were not packaged, and another set were placed into the bucket without desiccant. The buckets were closed with lids made of polypropylene that had the WVTR of 0.35 to 0.64 g/m²-day determined by ASTM F1249 as disclosed in embodiments herein. All the buckets and unpacked wheels were exposed to 90% RH and 40°C and moisture uptake of the abrasive articles over 12 days, 24 days, 36 days, 48 days were determined, respectively.

**TABLE 2**

| Samples | Package |
|---|---|
| C1 | Not packed |
| C2 | Packed without desiccant |
| S3 | Packed with Bentonite including 23000 ppm of calcium ions |
| S4 | Packed with silica gel |
| S5 | Packed with molecular sieves |
| S6 | Packed with drierite |
| S7 | Packed with bentonite including 7530 ppm calcium ions |

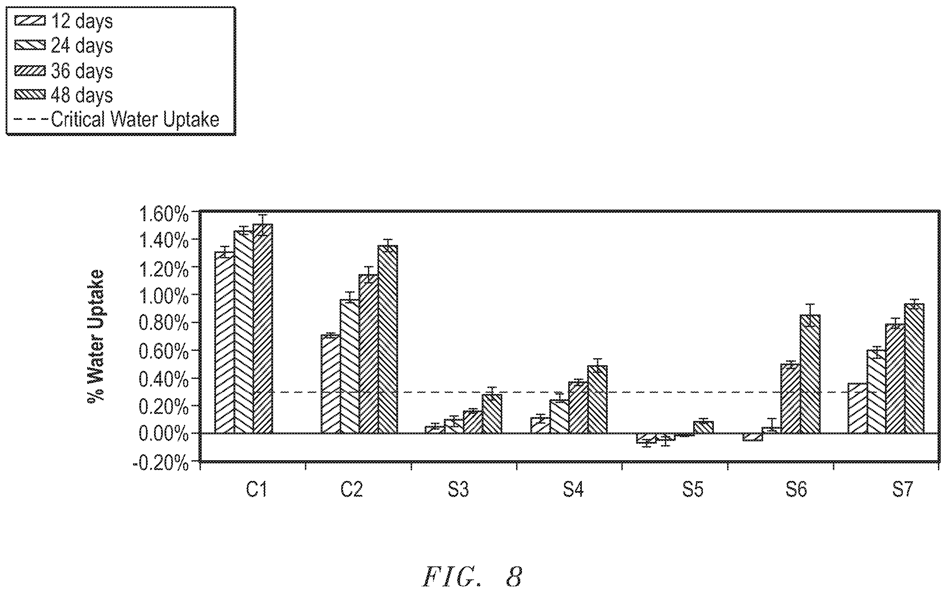

FIG. 8 includes a bar graph of moisture uptake of samples C1, C2, and S3 to S7, and the average moisture uptake of the wheels are included in Table 3.

**TABLE 3**

| Exposure Days | C1 (%) | C2 (%) | S3 (%) | S4 (%) | S5 (%) | S6 (%) | S7 (%) |
|---|---|---|---|---|---|---|---|
| 12 | 1.30 | 0.70 | 0.05 | 0.11 | -0.07 | -0.05 | 0.35 |
| 24 | 1.46 | 0.96 | 0.09 | 0.24 | -0.05 | 0.04 | 0.60 |
| 36 | 1.56 | 1.14 | 0.16 | 0.37 | -0.01 | 0.50 | 0.79 |
| 48 | n/a | 1.35 | 0.28 | 0.49 | 0.09 | 0.85 | 0.93 |

Samples C1, C2, and S7 had moisture uptake above the critical level, 0.3%, over the 12-day exposure. Over the prolonged exposure time, e.g., 36 days and 45 days, samples S3 and S5 demonstrated moisture uptake less than the critical level. For the shorter exposure time, 12 days and 24 days, samples S4 and S6 had moisture uptake less than the critical level, but moisture uptake increased over time to higher than the critical level at day 36 and 48.

### Example 3

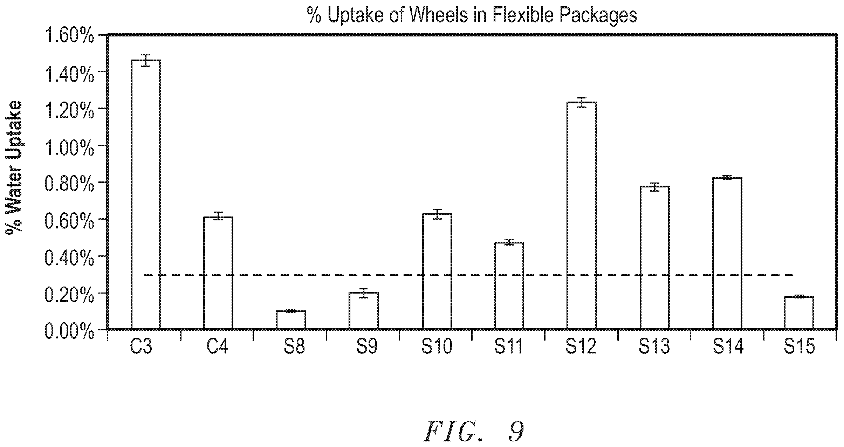

Commercially available Gemini Right Cut cutoff wheels and different desiccants were sealed in bags to form samples S8 to S15 as disclosed in Table 4. The bags were formed using laminated films including a metalized PET film and coextruded PE film. The laminated films had the WVTR of 1.2 g/m²-day. Each bag of samples S8 to S15 contained 32.5 g of desiccant and 3 cutoff wheels. A set of 3 wheels were not packaged, and another set were sealed in the bag without desiccant. All the samples were exposed to 90% RH and 40°C and moisture uptake of the abrasive articles over 12 days were determined and illustrated in FIG. 9.

**TABLE 4**

| Samples | Package |
|---|---|
| C3 | Not packaged |
| C4 | Packaged without desiccant |
| S8 | Packaged with bentonite including 23000 ppm calcium ions |
| S9 | Packaged with bentonite |
| S10 | Packaged with kaolinite |
| S11 | Packaged with talc |
| S12 | Packaged with vermiculite |
| S13 | Packaged with mica 325-PO |
| S14 | Packaged with mica 325-S |
| S15 | Packaged with sepiolite |

FIG. 9 includes a bar graph of moisture uptake of samples C3, C4, and S8 to S15. As illustrated, samples S8, S9, and S15 had moisture uptake less than the critical level, 0.3% (dotted line in FIG. 9), while the others had higher moisture uptake.

### Example 4

Cutoff wheels having an average weight of about 45 grams and different amounts of bentonite including 23000 ppm of calcium ions were placed in buckets formed with polypropylene to form different package Samples S19 to S23. Each package included 25 wheels. Package Samples S19 to C23 were exposed to the aging condition of 90% RH and 40°C for 4 days, 8 days, or 12 days. After exposure, average G-ratio and average material removal rate of each of Samples S19 to S23 was determined by performing a grinding test of the wheels on stainless steel workpieces. At least 3 wheels that were not exposed but were refreshed by drying at 130°C for 24 hours (referred to as CS16 hereinafter) were tested in the same grinding condition for determining average G-ratio and average material removal rate of CS16.

Twenty-five wheels were packed in a carton box without desiccant to form Sample CS17. Another 25 wheels were packed in the same type of polypropylene bucket as Samples S19 to S23 without desiccant to form Sample CS18. Samples CS17 and CS18 were exposed to the same aging condition and tested in the same grinding conditions as Samples S19 to S23 for determining their respective average G-ratio and material removal rate.

The average G-ratio and average material removal rate of all Samples were divided by the average G-ratio and average material removal rate of CS16, respectively, and the resulted relative G-ratio and relative material removal rate of all the samples are disclosed in Table 5 below. Relative G-ratio of Sample S19 is comparable to that of Sample CS16 after the 4-day, 8-day, and 12-day exposure to the aging condition.

**TABLE 5**

| Sample | Amount of Desiccant (number of bags of desiccant × amount in each bag) | Exposure time (days) | Relative G-Ratio (%) | Relative Material Removal Rate (%) |
|---|---|---|---|---|
| CS16 | None | None | 100 | 100 |
| CS17 | None | 4 | 64 | 94 |
| | | 8 | 52 | 93 |
| | | 12 | 46 | 87 |
| CS18 | None | 4 | 74 | 104 |
| | | 8 | 80 | 101 |
| | | 12 | 67 | 100 |
| S19 | 2 × 1/16 UD NFH | 4 | 93 | 104 |
| | | 8 | 96 | 99 |
| | | 12 | 90 | 98 |
| S20 | 1 × 1/16 UD NFH | 4 | 92 | 106 |
| | | 8 | 100 | 102 |
| | | 12 | 85 | 101 |
| S21 | 3 × 1/50 UD NFH | 4 | 87 | 110 |
| | | 8 | 90 | 105 |
| | | 12 | 80 | 100 |
| S22 | 2 × 1/50 UD NFH | 4 | 77 | 107 |
| | | 8 | 88 | 104 |
| | | 12 | 77 | 99 |
| S23 | 1 × 1/50 UD NFH | 4 | 88 | 104 |
| | | 8 | 84 | 102 |
| | | 12 | 78 | 98 |

### Example 5

SB4^{®} wheels (available from Saint-Gobain Abrasives) having the dimension of 125X1.6 mm were refreshed at 130°C for 24 hours and weighed (Wo). Two refreshed wheels, referred to as CS24, were subjected to a grinding operation performed on a stainless steel workpiece for evaluation of G-Ratio and Material Removal Rate (MRR). Every 25 wheels were packed in a carton box without a desiccant to form Samples CS25 or in a polypropylene bucket containing 1/8 UD NFH of bentonite including 23000 ppm of calcium ions to form Samples S 26, respectively. All the CS25 and S26 Samples were stored in air at 20°C to 25 °C for up to 7 months to allow the wheels to age naturally. Aged Samples were weighed (Wa) to determine moisture uptake according to embodiments described herein, and G-Ratio and MRR of aged Samples was tested in the same manner as described with respect to CS24.

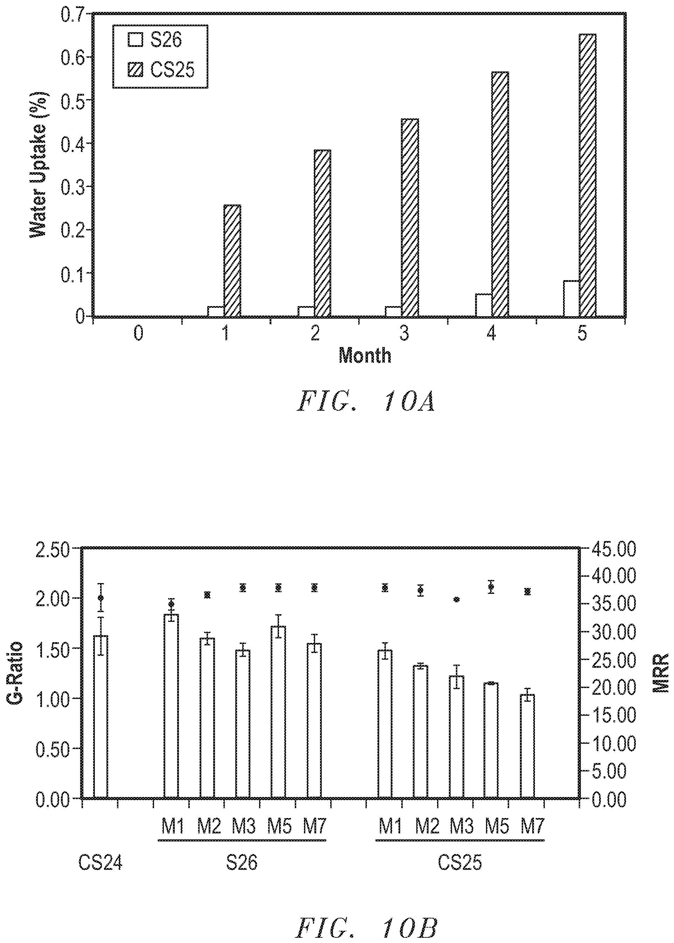

FIG. 10A includes a plot illustrating moisture uptake of Samples CS25 and S26 after aging for 1 month, 2 months, 3 months, 5 months, and 7 months. Sample S26 demonstrated significantly reduced moisture uptake compared to Sample CS25 for all tested aging times. For up to 7 months, moisture uptake of Sample S26 was below the critical level 0.3%, while moisture uptake of Sample CS25 exceeded the critical level when stored over 2 months.

FIG. 10B includes a plot of G-Ratio and MMR of all the Samples. As illustrated, Sample S26 had similar G-Ratio and MMR for each tested time period compared to refreshed Sample CS24, while Sample CS25 demonstrated increased loss in both G-Ratio and MRR over time.

The present embodiments represent a departure from the state of the art. It was unexpectedly and surprisingly discovered that packages including certain desiccant can facilitate significantly improved and extended protection of abrasive articles from moisture uptake, which can be expected to improve performance of the abrasive tool over time and mitigate aging. In particularly instances, the use of certain desiccant in combination with packaging materials that have a relatively higher water vapor transmission rate can unexpectedly improve water vapor uptake of abrasive tools after extended exposure to humidity. Certain characteristics of desiccant (e.g., particular calcium ion contents and/or crystalline structures) in combination with packaging materials are considered to contribute to improved moisture resistance function of the packages.

Note that not all of the activities described above in the general description or the examples are required, that a portion of a specific activity may not be required, and that one or more further activities may be performed in addition to those described. Still further, the order in which activities are listed is not necessarily the order in which they are performed.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims. Reference herein to a material including one or more components may be interpreted to include at least one embodiment wherein the material consists essentially of the one or more components identified. The term "consisting essentially" will be interpreted to include a composition including those materials identified and excluding all other materials except in minority contents (e.g., impurity contents), which do not significantly alter the properties of the material. Additionally, or in the alternative, in certain non-limiting embodiments, any of the compositions identified herein may be essentially free of materials that are not expressly disclosed. The embodiments herein include range of contents for certain components within a material, and it will be appreciated that the contents of the components within a given material total 100%.

The specification and illustrations of the embodiments described herein are intended to provide a general understanding of the structure of the various embodiments. The specification and illustrations are not intended to serve as an exhaustive and comprehensive description of all of the elements and features of apparatus and systems that use the structures or methods described herein. Accordingly, the disclosure is to be regarded as illustrative rather than restrictive.

## Claims

1. An article, comprising a package (100, 500) including:
a packaging material (108, 508) defining an enclosed volume (112, 510); and
a desiccant (110, 506) contained within the enclosed volume (112, 510); and
a bonded abrasive article (104, 504) contained within the enclosed volume (112, 510),
wherein the desiccant (110, 506) comprises a layered crystalline structure and calcium ions,
**characterized in that** the calcium ions are present in an amount of at least 7600 ppm and at most 100000 ppm of a total weight of the desiccant (110, 506).

2. The article of claim 1, wherein the desiccant (110, 506) comprises a silicate.

3. The article of claim1, wherein the desiccant (110, 506) comprises an aluminosilicate.

4. The article of claim 1, wherein the desiccant (110, 506) comprises calcium ions in the amount of at least 20000 ppm.

5. The article of claim 4, wherein the layered crystalline structure comprises a plurality of units (201), wherein each unit (201) comprises at least one tetrahedral sheet (202, 204, 207) and an octahedral sheet (203).

6. The article of claim 5, wherein the layered crystalline structure comprises an interlayer (205) between adjacent units (201), wherein the interlayer (205) comprises the calcium ions, sodium ions, potassium ions, or any combination thereof.

7. The article of claim 1, wherein the desiccant includes molecular sieves, clay, or any combination thereof.

8. The article of claim 1, wherein the desiccant (110, 506) comprises a clay including a 2:1 ratio of tetrahedral (202, 204, 207) to octahedral (203) crystal sheets.

9. The article of any one of claims 1 to 8, wherein the desiccant (110, 506) consists essentially of at least one material selected from the group consisting of bentonite, montmorillonite, and sepiolite.

10. The article of claim 1, wherein the packaging material (108, 508) forms a side wall (102) surrounding the enclosed volume (112, 510).

11. The article of claim 1, wherein the packaging material (108, 508) comprises a water vapor transmission rate of at most 1 g/m²-day.

12. The article of claim 1, wherein the packaging material (108, 508) comprises a water vapor transmission rate of at least 0.2 g/m²-day.

13. The article of claim 1, wherein the packaging material (108, 508) comprises high density polyethylene, low density polyethylene, polypropylene, or any combination thereof.

14. The article of claim 1, wherein the packaging material (108, 508) consists essentially of an organic material.

15. The article of claim 1, wherein the bonded abrasive article has a moisture uptake of:
at most 0.3% when the package (100, 500) is exposed to 90% relative humidity at 40°C for 24 days;
at most 0.3% when the package (100, 500) is exposed to air at 20°C to 25°C for 2 months; or
a combination thereof.

## Patentansprüche

1. Artikel, der eine Verpackung (100, 500) umfasst, die Folgendes einschließt:
ein Verpackungsmaterial (108, 508), das ein umschlossenes Volumen (112, 510) definiert; und
ein Trockenmittel (110, 506), das im umschlossenen Volumen (112, 510) enthalten ist; und
einen gebundenen Schleifartikel (104, 504), der in dem umschlossenen Volumen (112, 510) enthalten ist,
wobei das Trockenmittel (110, 506) eine geschichtete kristalline Struktur und Calciumionen umfasst,
**dadurch gekennzeichnet, dass** die Calciumionen in einer Menge von mindestens 7600 ppm und höchstens 100.000 ppm eines Gesamtgewichts des Trockenmittels (110, 506) vorhanden sind.

2. Artikel nach Anspruch 1, wobei das Trockenmittel (110, 506) ein Silikat umfasst.

3. Artikel nach Anspruch 1, wobei das Trockenmittel (110, 506) ein Aluminiumsilikat umfasst.

4. Artikel nach Anspruch 1, wobei das Trockenmittel (110, 506) Calciumionen in einer Menge von mindestens 20.000 ppm enthält.

5. Artikel nach Anspruch 4, wobei die geschichtete kristalline Struktur eine Vielzahl von Einheiten (201) umfasst, wobei jede Einheit (201) mindestens eine tetraedrische Schicht (202, 204, 207) und eine oktaedrische Schicht (203) umfasst.

6. Artikel nach Anspruch 5, wobei die geschichtete kristalline Struktur eine Zwischenschicht (205) zwischen benachbarten Einheiten (201) umfasst, wobei die Zwischenschicht (205) Calciumionen, Natriumionen, Kaliumionen oder eine beliebige Kombination davon umfasst.

7. Artikel nach Anspruch 1, wobei das Trockenmittel Molekularsiebe, Ton oder eine beliebige Kombination davon umfasst.

8. Artikel nach Anspruch 1, wobei das Trockenmittel (110, 506) einen Ton umfasst, der ein Verhältnis von 2:1 von tetraedrischen (202, 204, 207) zu oktaedrischen (203) Kristallschichten aufweist.

9. Artikel nach einem der Ansprüche 1 bis 8, wobei das Trockenmittel (110, 506) im Wesentlichen aus mindestens einem Material besteht, das aus der Gruppe ausgewählt ist, die aus Bentonit, Montmorillonit und Sepiolith besteht.

10. Artikel nach Anspruch 1, wobei das Verpackungsmaterial (108, 508) eine Seitenwand (102) bildet, die das umschlossene Volumen (112, 510) umgibt.

11. Artikel nach Anspruch 1, wobei das Verpackungsmaterial (108, 508) eine Wasserdampfdurchlässigkeit von höchstens 1 g/m²-Tag aufweist.

12. Artikel nach Anspruch 1, wobei das Verpackungsmaterial (108, 508) eine Wasserdampfdurchlässigkeit von mindestens 0,2 g/m²-Tag aufweist.

13. Artikel nach Anspruch 1, wobei das Verpackungsmaterial (108, 508) Polyethylen hoher Dichte, Polyethylen niedriger Dichte, Polypropylen oder eine beliebige Kombination davon umfasst.

14. Artikel nach Anspruch 1, wobei das Verpackungsmaterial (108, 508) im Wesentlichen aus einem organischen Material besteht.

15. Artikel nach Anspruch 1, wobei der gebundene Schleifartikel eine Feuchtigkeitsaufnahme aufweist von:
höchstens 0,3 %, wenn die Verpackung (100, 500) 24 Tage lang einer relativen Luftfeuchtigkeit von 90 % bei 40 °C ausgesetzt ist;
höchstens 0,3 %, wenn die Verpackung (100, 500) 2 Monate lang Luft bei 20 °C bis 25 °C ausgesetzt ist; oder
eine Kombination davon.

## Revendications

1. Article, comprenant un emballage (100, 500) comportant :
un matériau d'emballage (108, 508) définissant un volume fermé (112, 510) ; et
un déshydratant (110, 506) contenu à l'intérieur du volume fermé (112, 510) ; et
un article abrasif lié (104, 504) contenu à l'intérieur du volume fermé (112, 510),
dans lequel le déshydratant (110, 506) comprend une structure cristalline en couches et des ions de calcium,
**caractérisé en ce que** les ions calcium sont présents en une quantité d'au moins 7600 ppm et d'au plus 100 000 ppm d'un poids total du déshydratant (110, 506).

2. Article selon la revendication 1, dans lequel le déshydratant (110, 506) comprend un silicate.

3. Article selon la revendication 1, dans lequel le déshydratant (110, 506) comprend un aluminosilicate.

4. Article selon la revendication 1, dans lequel le déshydratant (110, 506) comprend des ions calcium en quantité d'au moins 20 000 ppm.

5. Article selon la revendication 4, dans lequel la structure cristalline en couches comprend une pluralité d'unités (201), dans lequel chaque unité (201) comprend au moins une feuille tétraédrique (202, 204, 207) et une feuille octaédrique (203).

6. Article selon la revendication 5, dans lequel la structure cristalline en couches comprend une couche intermédiaire (205) entre des unités adjacentes (201), dans lequel la couche intermédiaire (205) comprend des ions calcium, des ions sodium, des ions potassium ou une combinaison quelconque de ceux-ci.

7. Article selon la revendication 1, dans lequel le déshydratant comporte des tamis moléculaires, une argile ou une combinaison quelconque de ceux-ci.

8. Article selon la revendication 1, dans lequel le déshydratant (110, 506) comprend une argile comportant un rapport de 2:1 de feuilles cristallines tétraédriques (202, 204, 207) par rapport aux feuilles cristallines octaédriques (203).

9. Article selon l'une quelconque des revendications 1 à 8, dans lequel le déshydratant (110, 506) est essentiellement constitué d'au moins un matériau choisi dans le groupe constitué de bentonite, montmorillonite et sépiolite.

10. Article selon la revendication 1, dans lequel le matériau d'emballage (108, 508) forme une paroi latérale (102) entourant le volume fermé (112, 510).

11. Article selon la revendication 1, dans lequel le matériau d'emballage (108, 508) présente un coefficient de transmission de la vapeur d'eau d'au plus 1 g/m²-jour.

12. Article selon la revendication 1, dans lequel le matériau d'emballage (108, 508) présente un coefficient de transmission de la vapeur d'eau d'au moins 0,2 g/m²-jour.

13. Article selon la revendication 1, dans lequel le matériau d'emballage (108, 508) comprend du polyéthylène haute densité, du polyéthylène basse densité, du polypropylène ou une combinaison quelconque de ceux-ci.

14. Article selon la revendication 1, dans lequel le matériau d'emballage (108, 508) est essentiellement constitué d'une matière organique.

15. Article selon la revendication 1, dans lequel l'article abrasif lié a une absorption d'humidité de :
au plus 0,3 % lorsque l'emballage (100, 500) est exposé à une humidité relative de 90 % à 40 °C pendant 24 jours ;
au plus 0,3 % lorsque l'emballage (100, 500) est exposé à l'air à une température comprise entre 20 °C et 25 °C pendant 2 mois ; ou
une combinaison des deux.
